# EUROPÄISCHE PATENTSCHRIFT

(11) **EP 1 384 935 B1**
(45) Veröffentlichungstag und Bekanntmachung des Hinweises auf die Patenterteilung: **29.04.2009**
(21) Anmeldenummer: 03010337.8
(22) Anmeldetag: 08.05.2003
(51) Int. Cl.: F16L 51/02, F16L 23/16, F16L 27/108

(54) **Rohrleitung und Flexibles Rohrverbindungsstück aus elastisch verformbarem Material**
Pipe and Flexible connecting piece, made of elastically deformable material
Tuyau et pièce flexible de raccordement, en matériau déformable élastiquement

(30) Priorität: 27.07.2002 DE 10234362
(43) Veröffentlichungstag der Anmeldung: 28.01.2004
(73) Patentinhaber: ContiTech Luftfedersysteme GmbH, 30165 Hannover (DE)
(72) Erfinder: Fleck, Andreas, 30827 Garbsen (DE); Kluth, Olaf, Dr., 30419 Hannover (DE)
(74) Vertreter: Finger, Karsten

(56) Entgegenhaltungen:
- DE-A- 3 923 344
- FR-A- 2 657 941
- US-A- 3 552 776
- US-A- 4 155 573

## Beschreibung

Die Erfindung betrifft eine Rohrleitung mit einem flexiblen Rohrverbindungsstück, einem sogenannten Kompensator, aus elastisch verformbarem Material mit angearbeiteten, auswärts vorspringenden Endflanschen, gemäß dem Oberbegriff des Anspruchs 1.

Zur Befestigung an Gegenflanschen von Rohrenden dienen ringartige Rohranschlussstücke (Hinterlegflansche) aus Metall, die die Endflansche der Rohrverbindungsstücke hintergreifen.

Kompensatoren werden zur Dehnungsaufnahme in thermisch beanspruchten Rohrleitungen eingesetzt. Auch werden sie zur Schwingungs- und Geräuschdämpfung von anzuschließenden Aggregaten, wie Motoren, Pumpen, verwendet. Ebenfalls empfiehlt sich der Einbau von Gummi-Kompensatoren zur wirksamen Unterbrechung von Körperund Wasserschallfortleitung. Schließlich sei nicht vergessen, dass mit Kompensatoren ein Ausgleich von Montageungenauigkeiten vorgenommen werden kann.

Es sind die verschiedenartigsten Verbindungsstücke für Rohrleitungen bekannt. Diese Rohrverbindungsstücke weisen
jeweils einen elastischen, wellen- oder schlauchförmigen Balg mit an dessen Enden eingebundenen Endarmaturen auf.

Damit die Balgenden durch die im Betrieb auftretenden Zug- und Druckbeanspruchungen nicht aus der Flanschverbindung herausgezogen werden können, wird der Kompensator vorzugsweise an seinen Endrändern (Endflanschen) durch ringförmige Einlagen formstabil ausgesteift.

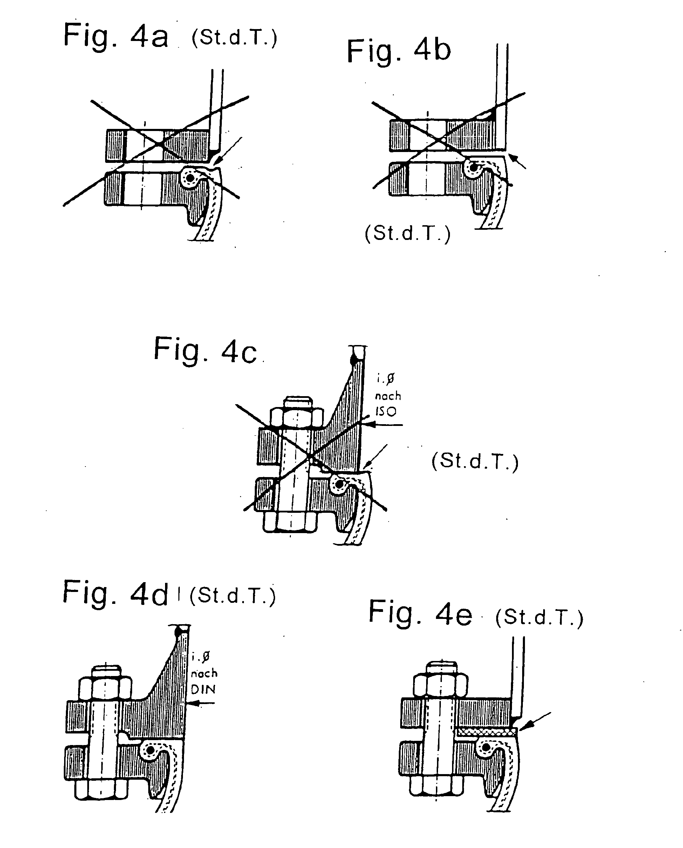

Als Gegenflansche können normgerechte Vorschweißflansche (z. B. nach DIN 2633) mit Dichtleiste verwendet werden, die sich stirnseitig an die Rohrleitung anschließen.
In der Regel sind zusätzliche Dichtungen beim Einbau der Gummi-Kompensatoren nicht erforderlich.
Da das Elastomermaterial der Gummibälge gegen Kerbwirkung relativ empfindlich ist, sollten die Dichtflächen der Gegenflansche unbedingt plan sein und für die gesamte Dichtfläche des Kompensators eine Anlage bieten (siehe Fig. 4a). Flanschausführungen mit Nut und Feder oder nicht auf der vollen Fläche anliegende Flansche führen in kurzer Zeit zu Rissbildung in der Dichtfläche und damit zum Ausfall des Gummikörpers.

Die Fig. 4a bis 4e zeigen verschiedene Ausführungsvarianten der Befestigung von gattungsgemäßen Kompensatoren:
Fig. 4a zeigt als Gegenflansch einen sogenannten "Slip-On-Flansch" (z. B. DIN 28031). Dieser Flansch wird außen auf das zu verbindende Rohrende angelötet oder angeschweißt. Der scharfe Innenrand der Rohrleitung erzeugt eine Einkerbung der Gummidichtfläche. Unter Druck- bzw. Zugbelastung führt eine solche Einkerbung schließlich zur Zerstörung des Balges.

Bei der in Fig. 4b gezeigten Ausführungsform eines "Slip-On-Flansches" kann ein rauhes Rohrende eine Beschädigung der Gummidichtfläche verursachen.
Die Fig. 4c zeigt einen Gegenflansch mit zu großem Innendurchmesser. Auch solche Flansche können die Gummidichtfläche beschädigen.

Die Fig. 4d zeigt eine Verbindung, bei der der Gegenflansch als sogenannter "Vorschweißflansch" ausgebildet ist. Dies stellt zwar eine einwandfrei dichte Befestigung dar. Vorschweißflansche sind aber teuer in der Herstellung.
Bei Gefahr der Beschädigung gemäß Ausführungsformen nach Fig. 4a, 4b und 4c kann zusätzlich eine Flachdichtung verwendet werden (Fig. 4e). Dies stellt aber ein zusätzliches Teil und damit einen zusätzlichen Kostenfaktor dar und erschwert die Montage des Kompensators in der Rohrleitung. Wenn der Einbau einer solchen Flachdichtung vergessen wird, besteht die Gefahr einer Beschädigung (vgl. Fig. 4a, 4b oder 4c).

Der Kompensator soll direkt zusammen mit Anschweißflanschen als Gegenflansche verwendet werden können, ohne Zusatzdichtungen oder entsprechende Vorbereitung der Fügestelle.

Gemäß der in Anspruch 1 aufgezeigten Lösung werden die üblicherweise im Dichtflächenmaterial entstehenden Scherspannungen durch eine Aussparung im kritischen Bereich vermieden.
Die erfindungsgemäße Lösung weist eine insbesondere für Anschweißflansche ("Slip-On-Flansche") geeignete Dichtfläche auf.

Um ein Verfließen des Dichtflächenmaterials zu vermeiden und um eine definierte Druckspannung in die Dichtfläche einzubringen, kann in die Aussparung ein formbeständiges Bauteil (z. B. Metall, Thermoplast, ...) eingesetzt werden.
Damit ergibt sich eine stabile Dichtflächenstruktur.

Im folgenden werden bevorzugte Ausführungsformen der Erfindung anhand der beigefügten Zeichnungen erläutert.
Es zeigt:
Fig. 1 den Längsschnitt durch ein komplettes Rohrverbindungsstück mit Flanschverbindung im eingebauten Zustand;
Fig. 2 ebenfalls den Längsschnitt durch ein komplettes Rohrverbindungsstück, hier mit Schraubverbindung;
Fig. 3 zeigt den konstruktiven Aufbau eines gattungsgemäßen Rohrverbindungsstückes;
Fig. 4 (4a bis 4e) zeigt verschiedene Möglichkeiten der falschen und richtigen Montage von Rohrverbindungsstücken gemäß dem Oberbegriff des Anspruchs 1;
Fig. 5 und 6 zeigen verschiedene Ausführungs-Details des erfindungsgemäßen Rohrverbindungsstücks.

Das in den Abbildungen dargestellte Rohrverbindungsstück 2, d.h. der Kompensator für den Einsatz in druckbeaufschlagten Rohrleitungen, besitzt einen Balg 4 aus elastisch verformbarem Material.

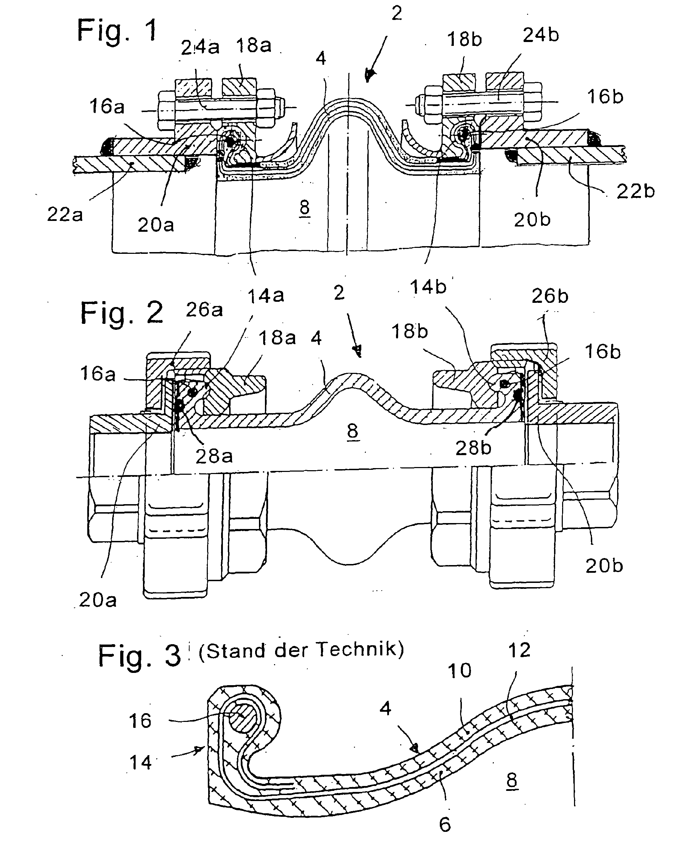

Wie aus Fig. 1 und Fig. 2 ersichtlich, ist der Balg 4 ein gewellter oder zylindrischer Gummikörper mit endseitig nach außen gerichteten wulstförmigen Flanschbunden 14a, 14b, die jeweils eine Verstärkung 16a, 16b aufweisen. Die Verstärkung muss nicht mit Draht realisiert werden (z. B. auch Spiralfedern, Hartgummi oder Thermoplast möglich). Auch eine Ausführung ohne separate Verstärkung ist
denkbar. Vor oder nach der Vulkanisation werden Stahlflansche (Hinterlegflansche) montiert.

Die Flansche 18a, 18b bestehen aus Kohlenstoff-Stahl, Edelstahl oder aus Aluminium. Bei kleineren Abmessungen kommen auch Kunststoff-Flansche, z. B. aus Polyamid, zum Einsatz.
Die zu verbindenden Rohrenden 22a, 22b sind mit Gegenflanschen 20a, 20b versehen. Die Verbindung der Gegenflansche 20a, 20b mit den Hinterlegflanschen 18a, 18b kann z. B. mittels Schraubbolzen 24a, 24b (Fig. 1) oder mittels Überwurfmuttern 26a, 26b (Fig. 2) vorgenommen werden.

Die mit Fig. 3 gegebene Detaildarstellung zeigt einen dreischichtigen Aufbau des Balges 4. Die als "Seele" bezeichnete Innenlage 6, die dem durchzuleitenden Medium 8 zugewandt ist, besteht aus Gummi oder einem sonstigen elastomeren Material und weist eine gute Dichtigkeit und Beständigkeit auf. Die Außenlage ("Decke") 10 bietet eine wirksame Beständigkeit gegen Umwelteinflüsse, wie z. B. Sonneneinstrahlung und chemisch aggressive Substanzen. Zwischen der "Seele" 6 und der "Decke" 10 befindet sich ein Festigkeitsträger 12, der mehrlagig sein kann und aus Textil- bzw. Metall-Corden oder kreuzweise zueinander angeordneten Textil- bzw. Metallfäden besteht, die in Elastomerschichten eingebettet sind.
Mit "14" ist ein wulstförmiger Flanschbund gekennzeichnet, der eine Verstärkungseinlage 16 aufweist.

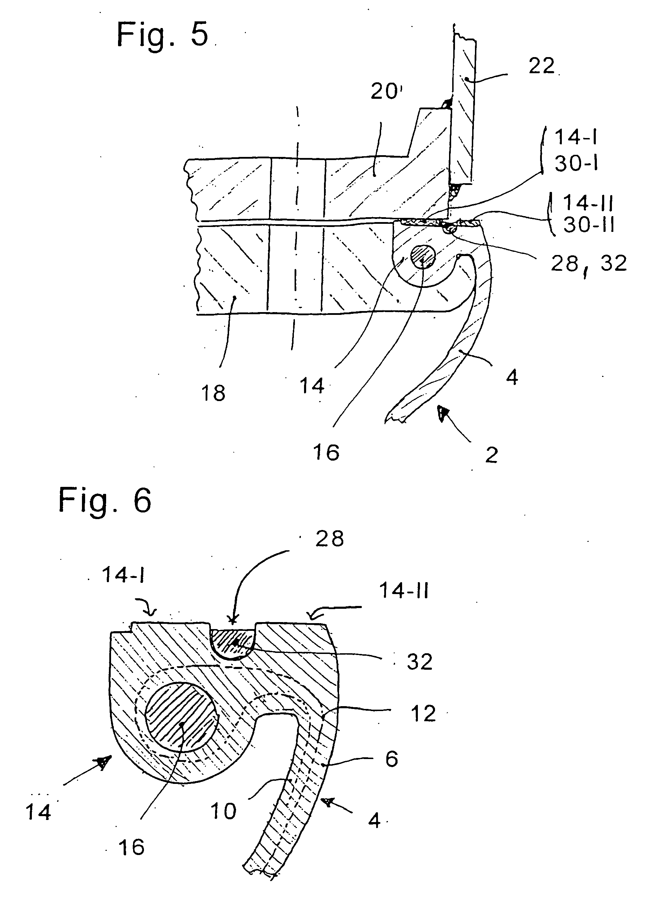

Der Grundaufbau der in Fig. 5 dargestellten erfindungsgemäßen Ausführungsform ist mit dem Aufbau gemäß Fig. 4a vergleichbar: Die Außenseite eines Rohrendes 22 ist mit einem Anschweißflansch als Gegenflansch 20 verlötet oder verschweißt. An den Gegenflansch 20 wird der
wulstförmige Flanschbund 14 eines Rohrverbindungsstückes 2 mit Hilfe eines Hinterlegflansches 18 befestigt. Der wulstförmige Flanschbund 14 weist eine Verstärkung 16 in Form einer ringförmigen ggf. elastischen Einlage auf.
Das Besondere an dem Flanschbund 14 besteht darin, dass die stirnseitigen Dichtflächen des Flanschbundes (Dichtbundes) 14 in radialer Richtung jeweils durch eine umlaufende Nut 28 geteilt sind, so dass mindestens jeweils zwei koaxial konzentrische Dichtringflächen 14-I und 14-II gebildet werden, wobei im Zusammenwirken mit dem Anschweißflansch als Gegenflansch 20 lediglich die äußere Dichtringfläche 14-I zur Anlage gelangt(, und wobei im Zusammenwirken mit Vorschweißflanschen als Gegenflansche 20 beide Dichtflächen 14-I und 14-II zur Anlage gelangen würden).

Weiter ist aus Fig. 5 ersichtlich, dass die ringförmigen Dichtflächen 14-I und 14-II mit aufvulkanisierten ringförmigen Dichtscheiben 30-I und 30-II abgedeckt sind.

Fig. 6 zeigt den endseitigen Flanschbund 14 vergrößert in Alleinstellung. Zwischen äußerer 14-I und innerer Dichtringfläche 14-II ist ein Stabilisierungsring 32 in die Nut 28 des Flanschbundes (Dichtbund) 14 implantiert. Dieser Stabilisierungsring 32 ist vorzugsweise formstabil. Er kann aus Metall, Thermoplast oder Elastomer bestehen.

### Bezugszeichenliste

- 2: Rohrverbindungsstück, Kompensator
- 4: Balg
- 6: Innenlage, "Seele"
- 8: Medium
- 10: Außenlage, "Decke"
- 12: Festigkeitsträger
- 14; 14a, 14b: Flanschbund, Endflansch, Dichtbund, Ringbund,
- 14-I, 14-II: äußere, innere Dichtringfläche
- 16; 16a, 16b: Verstärkungseinlage, Drahtverstärkung, ringförmige Einlage
- 18; 18a, 18b: Hinterlegflansch, Stahlflansch, Rohranschlussstück, Halbringteile, Ringsegmentteile
- 20; 20a, 20b: Gegenflansch
(Anschweißflansch, Vorschweißflansch)
- 22; 22a, 22b: Rohrenden
- 24; 24a, 24b: Schraubbolzen
- 26a, 26b: Überwurfmutter
- 28; 28a, 28b: Nut
- 30-I, 30-II: ringförmige Dichtscheiben
- 32: Stabilisierungsring

## Patentansprüche

1. Rohrleitung mit zu verbindenden Rohrenden (22a, 22b), die jeweils mit einem Anschweißflansch (20, 20a, 20b) oder mit einem Vorschweißflansch (20, 20a, 20b) versehen sind, und mit einem Rohrverbindungsstück (2) aus einem wellen- oder schlauchförmigen, aus elastomerem Material bestehenden Balgkörper (4), der an seinen Enden jeweils einen vorspringenden Flanschbund (14; 14a, 14b) aufweist,
wobei die Flanschbunde (14; 14a, 14b) jeweils mit ringförmigen Rohranschlussstücken (18; 18a, 18b) hinterlegt sind, die jeweils mit den Anschweißflanschen (20a, 20b) oder Vorschweißflanschen verbunden sind, **dadurch gekennzeichnet,**
**dass** die stirnseitigen Dichtflächen der Flanschbunde (14; 14a, 14b) in radialer Richtung jeweils durch eine umlaufende Nut (28; 28a, 28b) geteilt sind,
so dass mindestens jeweils zwei koaxial konzentrische Dichtringflächen (14-I, 14-II) gebildet werden, wobei im Zusammenwirken mit den Anschweißflanschen (20, 20a, 20b) jeweils lediglich die äußere Dichtringfläche (14-I) damit komplett zur Anlage gelangt (Fig. 1) und wobei im Zusammenwirken mit den Vorschweißflanschen jeweils mindestens die äußere der beiden Dichtringflächen (14-I, 14-II) damit komplett zur Anlage gelangt (Fig. 2).

2. Rohrleitung nach Anspruch 1,
**dadurch gekennzeichnet,**
**dass** die Dichtringflächen (14-I, 14-II) durch mit dem Balg (4) verbundene ringförmige Dichtscheiben (30-I, 30-II) gebildet werden, und
**dass** diese Dichtscheiben (30-II, 30-II) aus einem elastomeren oder thermoplasten Werkstoff bestehen.

3. Rohrleitung nach Anspruch 1 oder 2,
**dadurch gekennzeichnet,**
**dass** zwischen äußerer (14-I) und innerer Dichtringfläche (14-II) ein Stabilisierungsring (32) in die Nut (28) des Dichtbundes (14; 14a, 14b) implantiert ist.

4. Rohrleitung nach Anspruch 3,
**dadurch gekennzeichnet,**
**dass** der Stabilisierungsring (32) formstabil ist und aus Metall, Elastomer oder Thermoplast besteht.

5. Rohrleitung nach einem der Ansprüche 1 - 4, **dadurch gekennzeichnet, dass** die Flanschbunde mit einer Verstärkungseinlage (16, 16a, 16b) versehen sind.

## Claims

1. Pipeline with pipe ends (22a, 22b) to be connected, which are provided in each case with a weld-on flange (20, 20a, 20b) or with a prewelding flange (20, 20a, 20b), and with a pipe connection piece (2) composed of a wavy or a tubular concertina body (4) which consists of elastomeric material and which has a projecting flange collar (14; 14a, 14b) at each of its ends, the flange collars (14; 14a, 14b) being backed in each case with annular pipe junction pieces (18; 18a, 18b) which are connected in each case to the weld-on flanges (20a, 20b) or prewelding flanges, **characterized in that** the end-face sealing surfaces of the flange collars (14; 14a, 14b) are divided in the radial direction in each case by a peripheral groove (28; 28a, 28b), so that at least in each case two coaxially concentric annular sealing surfaces (14-1, 14-II) are formed, in cooperation with the weld-on flanges (20, 20a, 20b) in each case only the outer annular sealing surface (14-1) coming completely into bearing contact with these (Fig. 1), and in cooperation with the prewelding flanges in each case at least the outer of the two annular sealing surfaces (14-1, 14-II) coming completely into bearing contact with these (Fig. 2).

2. Pipeline according to Claim 1, **characterized in that** the annular sealing surfaces (14-1, 14-II) are formed by annular sealing discs (30-1, 30-II) connected to the concertina (4), and **in that** these sealing discs (30-1, 30-II) consist of an elastomeric or thermoplastic material.

3. Pipeline according to Claim 1 or 2, **characterized in that** a stabilizing ring (32) is implanted into the groove (28) of the flange collar (14; 14a, 14b) between the outer (14-1) and the inner (14-II) annular sealing surface.

4. Pipeline according to Claim 3, **characterized in that** the stabilizing ring (32) is dimensionally stable and consists of metal, elastomer or thermoplastic.

5. Pipeline according to one of Claims 1 - 4, **characterized in that** the flange collars are provided with a reinforcing insert (16, 16a, 16b).

## Revendications

1. Tuyau avec des extrémités de tuyau (22a, 22b) à raccorder, qui sont pourvues chacune d'une bride de soudage (20, 20a, 20b) ou d'une bride de présoudage (20, 20a, 20b), et avec une pièce de raccordement de tuyau (2) constituée d'un corps de soufflet (4) de forme ondulée ou tubulaire, en matériau élastomère, qui présente à ses extrémités à chaque fois un épaulement de bride saillant (14 ; 14a, 14b),
les épaulements de bride (14 ; 14a, 14b) étant supportés à chaque fois avec des pièces de raccord tubulaires (18 ; 18a, 18b) qui sont à chaque fois connectées aux brides de soudage (20a, 20b), ou aux brides de présoudage,
**caractérisé en ce que**
les surfaces d'étanchéité frontales des épaulements de bride (14 ; 14a, 14b) dans la direction radiale sont à chaque fois divisées par une rainure périphérique (28 ; 28a, 28b), de sorte qu'à chaque fois au moins deux surfaces de bague d'étanchéité coaxiales et concentriques (14-1, 14-II) soient formées, à chaque fois seulement la surface de bague d'étanchéité extérieure (14-1) coopérant avec les brides de soudage (20, 20a, 20b) parvenant complètement en appui avec elles (figure 1) et à chaque fois au moins la surface de bague d'étanchéité la plus extérieure des deux (14-1, 14-II) coopérant avec les brides de présoudage parvenant complètement en appui avec elles (figure 2).

2. Tuyau selon la revendication 1,
**caractérisé en ce que**
les surfaces de bague d'étanchéité (14-1, 14-II) sont formées par des disques d'étanchéité (30-1, 30-II) de forme annulaire connectés au soufflet (4), et
**en ce que** ces disques d'étanchéité (30-1, 30-II) se composent d'un matériau élastomère ou thermoplastique.

3. Tuyau selon la revendication 1 ou 2,
**caractérisé en ce**
**qu'**entre la surface de bague d'étanchéité extérieure (14-1) et intérieure (14-II), une bague de stabilisation (32) est implantée dans la rainure (28) de l'épaulement d'étanchéité (14 ; 14a, 14b).

4. Tuyau selon la revendication 3,
**caractérisé en ce que**
la bague de stabilisation (32) a une forme stable et se compose de métal, d'élastomère ou de matériau thermoplastique.

5. Tuyau selon l'une quelconque des revendications 1 à 4, **caractérisé en ce que** les épaulements de bride sont pourvus d'un insert de renforcement (16, 16a, 16b).
